# EUROPÄISCHE PATENTANMELDUNG

(11) **EP 1 288 858 A1**
(43) Veröffentlichungstag der Anmeldung: **05.03.2003**
(21) Anmeldenummer: 01121101.8
(22) Anmeldetag: 03.09.2001
(51) Int. Cl.: G06T 7/00

(54) **Verfahren zum automatischen Erkennen von rote-Augen-Defekten in fotographischen Bilddaten**

(71) Anmelder: Agfa-Gevaert AG, 51373 Leverkusen (DE)
(72) Erfinder: Oberhardt, Knut, 83607 Föching (DE); Taresch, Gudrun, 80337 München (DE); Jacob, Friedrich, 81247 München (DE); Damm, Tobias, 81545 München (DE); Schindler, Hans-Georg, 83607 Holzkirchen (DE)

(57) **Zusammenfassung**

Die Erfindung betrifft ein Verfahren zum automatischen Erkennen von rote-Augen-Defekten in fotografischen Bilddaten. Dabei werden Bild- und/oder Aufnahmedaten auf mehrere vorgegebene Anzeichen und/oder Voraussetzungen hin unabhängig voneinander analysiert. Außerdem wird ein Wert für das Vorhandensein der einzelnen Anzeichen und/oder Voraussetzungen ermittelt wird. Danach werden die ermittelten Werte zu einer Gesamtbewertung zusammengefasst und es wird anhand der Gesamtbewertung eine Entscheidung über das Vorhandensein von möglichen rote-Augen-Defekten getroffen. Die möglichen rote-Augen-Defekte werden lokalisiert, und es wird anhand von Überprüfungskriterien entschieden, ob es sich dabei tatsächlich um rote-Augen-Defekte handelt.

## Beschreibung

Die Erfindung betrifft ein Verfahren zum Erkennen von rote-Augen-Defekten in fotografischen Bilddaten.

Derartige Verfahren sind aus verschiedenen Anmeldungen, die sich mit digitaler Bildverarbeitung befassen, bekannt.

Zur Detektion roter Augen existieren halbautomatische Programme, bei denen der Benutzer bei einem am PC dargestellten Bild eine Region markieren muss, in der die roten Augen enthalten sind. Innerhalb dieser markierten Region werden dann die roten Fehlstellen automatisch erkannt, eine Korrekturfarbe, welche zur Helligkeit des Auges passt, wird zugewiesen und die Korrektur automatisch durchgeführt.

Derartige Verfahren sind jedoch für automatische Kopiergeräte nicht geeignet, da an diesen viele Bilder sehr schnell nacheinander bearbeitet werden müssen und keine Zeit ist, jedes einzelne Bild vom Benutzer anschauen und evtl. markieren zu lassen.

Aus diesem Grund wurden für die Verwendung in automatischen Kopiergeräten bereits vollautomatische Verfahren entwickelt.

So beschreibt beispielsweise die EP 0961225 ein Programm zum Erkennen roter Augen in digitalen Bildern, welches mehrere Schritte umfasst. Hier werden zunächst Gebiete detektiert, welche Hauttöne aufweisen. Der nächste Schritt besteht darin, Ellipsen in diese detektierten Regionen mit Hauttönen einzupassen. Nur Regionen, in die derartige Ellipsen eingepasst werden können, werden im weiteren Verlauf als Kandidatenregionen für rote Augen betrachtet. In einem folgenden Schritt werden diese Ellipsengebiete auf Gesichtsform skaliert, wobei wiederum nur die Regionen für eine Weiterverarbeitung vorgesehen sind, welche bei dieser Skalierung eine zur Gesichtsform passende Größe ergeben. Innerhalb dieser Regionen werden dann zwei rote-Augen-Kandidaten gesucht, deren Abstand ― sobald sie ermittelt wurden ― mit dem Abstand von Augen verglichen wird. Falls auch die letzten beiden Kriterien erfüllt sind, wird davon ausgegangen, dass rote Augen gefunden wurden. Anschließend werden diese roten Augen korrigiert.

Nachteilig an diesem Programm zum Erkennen roter Augen ist seine hierarchische Struktur. Da keines der Kriterien innerhalb der einzelnen durchlaufenen Schritte mit absoluter Treffsicherheit erkannt wird, kann es sein, dass auf das Fehlen roter Augen, also ein defektfreies Bild, entschieden wird, sobald nur eines der Kriterien - wenn auch fälschlicherweise ― als nicht erfüllt gewertet wird. Wenn beispielsweise der Hautton durch seltsame Beleuchtungsverhältnisse nicht als Hautton erkannt wird, wird auch im Folgenden nicht weiter nach roten Augen gesucht. Dadurch ist dieses Verfahren sehr fehleranfällig.

Aufgabe der Erfindung war es deshalb, ein Verfahren zum automatischen Erkennen roter Augen zu entwickeln, welches möglichst zuverlässig arbeitet, d. h. rote-Augen-Defekte sicher findet, ohne andere Details fälschlicherweise als solche Defekte zu detektieren, wobei die Überprüfung der Bilddaten in einem Zeitrahmen stattfindet, der für automatische Kopiergeräte geeignet ist.

Gelöst wird diese Aufgabe gemäß der Erfindung durch ein Verfahren mit den Merkmalen von Anspruch 1. Weitere vorteilhafte Ausführungsformen sind Bestandteil der Unteransprüche im Zusammenhang mit der Beschreibung und den Zeichnungen.

Erfindungsgemäß werden die digital vorliegenden Bilddaten und/oder die zu den Bilddaten gehörenden Aufnahmedaten, welche bei der Aufnahme des Bildes abgespeichert werden, unabhängig voneinander auf diverse Anzeichen und/oder Voraussetzungen für rote-Augen-Defekte hin untersucht. Die sich aus der Untersuchung einzelner Anzeichen und Voraussetzungen ergebenden Werte, welche ein Maß für das Auftreten derselben in den Bild- oder Aufnahmedaten sind, werden zu einer Gesamtbewertung zusammengefasst. Anhand dieser Gesamtbewertung wird schließlich eine Entscheidung darüber getroffen, ob mögliche rote-Augen-Defekte in den zu untersuchenden Bilddaten vorliegen oder nicht. Das Abklären, ob es sich bei den gefundenen Kandidaten tatsächlich um rote-Augen-Defekte handelt, erfolgt anhand von Überprüfungskriterien, die auf die Kandidaten angewandt werden. Hier wird z. B. überprüft, ob die Kandidaten paarweise auftreten oder innerhalb eines Gesichtes liegen.

Dadurch, dass im erfindungsgemäßen Verfahren unterschiedliche Anzeichen oder Voraussetzungen nicht ― wie im Stand der Technik vorgeschlagen ― hierarchisch, sondern unabhängig voneinander analysiert werden, kann vermieden werden, dass das rote-Augen-Erkennungsverfahren abgebrochen wird, sobald eine der Voraussetzungen oder ein Anzeichen fälschlicherweise als nicht vorhanden erkannt wurde. Obwohl ein Anzeichen oder eine Voraussetzung als nicht existent festgehalten wurde, werden andere Voraussetzungen und Anzeichen überprüft, und wenn diese als existent ermittelt wurden, kann die Gesamtbewertung das Auftreten von rote-Augen-Defekten nahelegen, obwohl ein Anzeichen bzw. eine Voraussetzung gefehlt hat. Dadurch können im erfindungsgemäßen Verfahren rote-Augen-Defekte auch dann erkannt werden, wenn eines der Anzeichen oder eine der Voraussetzungen, die zur Erkennung derselben überprüft werden, nicht vorhanden sind. Wenn beispielsweise die Hautfarbe der fotografierten Person vom üblichen Hautton abweicht oder die Person eine Faschingsmaske trägt und das Detektionsverfahren deshalb keinen Hautton im Bild erkennt, können alle anderen zu überprüfenden Anzeichen und Voraussetzungen für rote-Augen-Defekte erfüllt sein und es kann richtig auf das Vorliegen solcher Defekte erkannt werden, wohingegen in dem im Stand der Technik vorgeschlagenen Verfahren das Erkennungsverfahren von rote-Augen-Defekten abgebrochen würde, falls keine Hauttöne im Bild zu finden sind.

Vorteilhafterweise können als Werte für das Vorhandensein von Anzeichen oder Voraussetzungen von rote-Augen-Defekten Wahrscheinlichkeiten ermittelt werden. Obwohl das Verfahren auch durchführbar ist, wenn die Anzeichen und Voraussetzungen nur als vorhanden bzw. nicht vorhanden klassifiziert werden, ist es doch genauer, Wahrscheinlichkeiten für das Vorhandensein zu ermitteln, da die meisten Anzeichen und Voraussetzungen nicht als hundertprozentig gegeben oder nicht gegeben analysiert werden können. Das Ermitteln von Wahrscheinlichkeiten eröffnet die Möglichkeit, in die Endbewertung einzubringen, wie sicher ein Anzeichen bzw. eine Voraussetzung ermittelt werden konnte oder nicht. Damit fließt neben dem Vorhandensein von Anzeichen und Voraussetzungen ein weiteres Kriterium, nämlich die Sicherheit bzw. Unsicherheit dieser Feststellung, mit in die Bewertung ein, was zu einem weitaus exakteren Gesamtergebnis führt. Aus den einzelnen Wahrscheinlichkeiten läßt sich für die Gesamtbewertung eine Gesamtwahrscheinlichkeit ermitteln, welche durch Vergleich mit einem Schwellwert ein Maß dafür ist, ob rote-Augen-Defekte vorliegen oder nicht.

Sehr vorteilhaft ist es auch, die ermittelten Werte des Vorhandenseins der Anzeichen oder Voraussetzungen mit einer Wichtung in die Gesamtbewertung einfließen zu lassen. Dadurch ist es beispielsweise möglich, die Anzeichen und Voraussetzungen zu kategorisieren in solche, welche sehr relevant für die Entscheidung auf rote-Augen-Defekte sind, in solche, die zwar ein gutes Anzeichen oder eine Voraussetzung sind, aber nicht immer vorliegen, und in solche, die nur manchmal auftreten. Dadurch, dass diese unterschiedlich kategorisierten Anzeichen und Voraussetzungen gewichtet in die Bewertung einfließen, wird ihrer Relevanz Rechnung getragen, was wiederum die Genauigkeit der Entscheidung erhöht.

Besonders vorteilhaft ist es, die für das Vorhandensein von Anzeichen und Voraussetzungen unabhängig voneinander ermittelten Werte zur Gesamtbewertung in ein neuronales Netz einfließen zu lassen. Innerhalb eines neuronalen Netzes erfolgt automatisch eine Wichtung der Kriterien, welche aber vorteilhafterweise anhand von Beispielbildern innerhalb der Lernphase des Netzes vorgenommen wird. Dem neuronalen Netz kann sowohl die Zusammenfassung der Werte zu einer Gesamtbewertung als auch die Entscheidung, ob mögliche oder tatsächliche rote-Augen-Defekte vorliegen, übertragen werden. In das neuronale Netz können als Werte entweder Binärdaten - also die Feststellung "Anzeichen bzw. Voraussetzung vorhanden" oder "nicht vorhanden" - oder aber Wahrscheinlichkeiten für das Vorhandensein von Anzeichen bzw. Voraussetzungen eingegeben werden. Es ist aber auch jede andere Form von Wertung des Vorhandenseins, wie beispielsweise eine Einteilung in "nicht vorhanden", "wahrscheinlich nicht vorhanden", "wahrscheinlich vorhanden" oder "sicher vorhanden" vorstellbar. Bei der Erstellung der Werte lassen sich alle möglichen vorstellbaren Wertungen verwenden.

In einer besonders vorteilhaften Ausführungsform des Verfahrens werden Anzeichen bzw. Voraussetzungen parallel analysiert. Dadurch, dass Bild- bzw. Aufnahmedaten parallel auf Anzeichen bzw. Voraussetzungen hin untersucht werden, kann viel Rechenzeit gespart werden. Dies macht ein Einsetzen dieses Verfahrens bei fotografischen Kopiergeräten in Großlaboren u. U. überhaupt erst möglich, da diese Geräte viele tausend Bilder in einer Stunde verarbeiten müssen.

Dennoch ist das Überprüfen der Bilddaten auf das Vorliegen von rote-Augen-Defekten immer ein rechenzeitintensives Verfahren. Deshalb ist es besonders vorteilhaft, dem Verfahren zum Erkennen von rote-Augen-Defekten eine Überprüfung der Bild- bzw. Aufnahmedaten auf Ausschlusskriterien hin vorzuschalten. Solche Ausschlusskriterien dienen dazu, rote-Augen-Defekte von vornherein auszuschließen, woraufhin das Verfahren zum Erkennen roter-Augen-Defekte automatisch abgebrochen werden kann. Dadurch kann zusätzlich viel Rechenzeit gespart werden. Derartige Ausschlusskriterien können beispielsweise sein: das Vorliegen von Aufnahmen, bei denen sicher kein Blitzlicht verwendet wurde, oder das Fehlen jeglicher größerer Gebiete mit Hauttönen oder ein starkes Abfallen der Fouriertransformierten der Bilddaten, was auf das Fehlen jeglicher Detailinformationen im Bild - also ein völlig homogenes Bild ― hindeutet. Auch alle anderen Kriterien, die zur rote-Augen-Erkennung verwendet werden, sich beliebig schnell überprüfen lassen und mit großer Sicherheit einen Ausschluss von Bildern ohne rote-Augen-Defekte bedingen. sind als Ausschlusskriterien verwendbar. So kann es auch ein Ausschlusskriterium sein, dass in der gesamten Bildinformation keine roten oder überhaupt keine Farbtöne vorkommen.

Ein besonders aussagekräftiges Kriterium, das ― wie bereits erwähnt ― als Ausschlusskriterium dient, aber auch eine Voraussetzung ist für das Vorliegen von rote-Augen-Defekten, ist die Verwendung von Blitzlicht bei der Aufnahme des Bildes. Da es überhaupt nur zu rote-Augen-Defekten im Bild kommt, falls bei einer Personenaufnahme das Licht des Blitzes am Augenhintergrund gespiegelt wird, ist dies ein sehr sicheres Kriterium. Direkt läßt sich das Fehlen eines Blitzes bei einer Aufnahme jedoch nur feststellen, wenn mittels der Kamera beim Aufnehmen des Bildes sog. Blitzmarker gesetzt wurden. Diese Marker können von APS- oder digitalen Kameras gesetzt werden und zeigen an, ob ein Blitz verwendet wurde oder nicht. Falls ein Blitzmarker gesetzt wurde, der besagt, dass bei der Aufnahme kein Blitz verwendet wurde, kann mit großer Sicherheit davon ausgegangen werden, dass keine rote-Augen-Defekte im Bild auftreten.

Bei der Mehrzahl der Bilder, bei denen jedoch kein derartiger Blitzmarker gesetzt wurde, kann nur indirekt darauf geschlossen werden, ob eine Blitzaufnahme vorliegt oder nicht. Dies ist beispielsweise anhand einer Bildanalyse feststellbar. In dieser können starke Schatten von Personen am Hintergrund gesucht werden, deren Kontur mit der Kontur des Gesichts übereinstimmt, deren Fläche jedoch eine andere Farbe bzw. eine andere Bilddichte aufweist als das Gesicht. Sobald solche sehr dominanten Schlagschatten auftreten, kann davon ausgegangen werden, dass mit großer Wahrscheinlichkeit ein Blitz bei der Aufnahme verwendet wurde.

Ein Anzeichen dafür, dass kein Blitz bei der Aufnahme verwendet wurde, ist es, wenn erkannt wird, dass es sich um ein sehr kontrastarmes Bild handelt. Ebenso deutet das Erkennen eines sog. Kunstlichtbildes, also eines Bildes, das die typischen Farben einer Glühlampenbeleuchtung oder Neonröhre aufweist, darauf hin, dass gar kein bzw. kein dominanter Blitz verwendet wurde. Ein Teil der Analyse, die zur Feststellung erfolgt, ob Blitzlicht verwendet wurde, kann bereits anhand der sog. Prescandaten (den Daten aus der Vorabtastung) vorgenommen werden. Üblicherweise wird beim Abtasten fotografischer Vorlagen vor dem eigentlichen Abtastvorgang, der die Bilddaten ergibt, ein Prescan durchgeführt, welcher eine Auswahl dieser Bilddaten in viel geringerer Auflösung ermittelt. Diese Prescandaten werden hauptsächlich dazu verwendet, die Empfindlichkeit des Aufnahmesensors für die Hauptabtastung optimal einzustellen. Sie bieten sich jedoch auch an, beispielsweise das Vorliegen einer Kunstlichtaufnahme oder einer kontrastarmen Aufnahme etc. festzustellen.

Diese niedrig aufgelösten Daten bieten sich zur Überprüfung der Ausschlusskriterien an, da ihre Analyse aufgrund des geringen Datensatzes nicht viel Zeit in Anspruch nimmt. Falls nur eine Abtastung der Bilder erfolgt oder nur hoch aufgelöste, digitale Daten vorliegen, ist es vorteilhaft, diese zum Überprüfen der Ausschlusskriterien zu nieder aufgelösten Daten zusammenzufassen. Dies kann durch Rasterung, Mittelwertbildung oder eine Pixelauswahl geschehen.

Um die Sicherheit der Aussage über das Vorliegen einer Blitzaufnahme bzw. das Fehlen von Blitzlicht bei der Aufnahme des Bildes zu erhöhen, ist es vorteilhaft, verschiedene der hier angegebenen Kriterien zu überprüfen und die bei Überprüfung der einzelnen Kriterien gewonnenen Ergebnisse zu einem Gesamtergebnis und einer Aussage über das Verwenden von Blitzlicht zusammenzufassen. Um Rechenzeit zu sparen, ist es auch hier besonders vorteilhaft, die Kriterien parallel zu analysieren. Die Auswertung kann ebenfalls anhand von Wahrscheinlichkeiten oder über ein neuronales Netz erfolgen.

Ein weiteres, für das automatische Erkennen von rote-Augen-Defekten wichtiges, zu überprüfendes Anzeichen sind zusammenliegende Hauttöne. Obwohl es mit Sicherheit Bilder gibt, die keine zusammenliegenden Hauttöne aufweisen und dennoch rote-Augen-Defekte zeigen (z. B. die Aufnahme eines mit einer Faschingsmaske abgedeckten Gesichts), kann dieses Anzeichen bei Inkaufnahme einiger Fehlentscheidungen auch als Ausschlusskriterium verwendet werden, um die Bilder einzuschränken, bei denen überhaupt nach rote-Augen-Defekten gesucht wird.

Besonders vorteilhaft ist es jedoch, dieses Kriterium ebenso wie andere in den Bilddaten zu überprüfen und es als eines von vielen Kriterien in eine Gesamtbewertung einfließen zu lassen. Damit würde gewährleistet, dass auch bei Faschingsbildern, bei Aufnahmen von Personen mit anderen Hauttönen oder bei sehr farbigen dominanten Beleuchtungen, bei denen die Hauttöne verändert werden, rote-Augen-Defekte in den Bildern gefunden werden können. Obwohl bei solchen Bildern das Anzeichen "Hautton" fehlt, könnten alle anderen überprüften Kriterien mit so großer Wahrscheinlichkeit bzw. so sicher ermittelt werden, dass die Gesamtbewertung ein Vorliegen von rote-Augen-Defekten feststellt bzw. nahelegt, obwohl keine Hauttöne vorhanden sind. Das im Stand der Technik beschriebene Verfahren würde dagegen beim Fehlen von Hauttönen das rote-Augen-Erkennungsverfahren abbrechen und evtl. zu einer Fehlentscheidung kommen.

Falls aber in einem Bild Hauttöne vorhanden sind, kann davon ausgegangen werden, dass es sich um eine Personenaufnahme handelt, bei der das Vorhandensein von rote-Augen-Defekten viel wahrscheinlicher ist als bei allen anderen Aufnahmen. Damit kann dieses Kriterium stark gewichtet werden. Insbesondere können zusammenliegende Hauttöne noch daraufhin untersucht werden, ob sie Charakteristiken eines Gesichts - wie dessen Form und Größe etc. - erfüllen, da sich mit der Wahrscheinlichkeit, dass es sich um ein Gesicht handelt, auch die Wahrscheinlichkeit für rote-Augen-Defekte erhöht. In diesem Fall kann das Kriterium noch aussagekräftiger sein.

Falls die Überprüfung von Hauttönen als Ausschlusskriterium verwendet werden soll, bei dessen Fehlen rote-Augen-Defekte überhaupt nicht mehr gesucht werden, genügt es auch hier, die Prescandaten oder in ihrer Auflösung reduzierte, entsprechende Datensätze zu verwenden. Wenn keine Hauttöne in diesen sehr grob aufgelösten Daten auftreten, ist sicher keine große zusammenliegende Hauttonfläche in den Bilddaten vorhanden. Um Rechenzeit zu sparen, ist es nämlich möglicherweise sinnvoll, auf das Detektieren von roten Augen in sehr kleinen Gesichtern oder in Bildern, die keine Gesichter aufweisen, zu verzichten.

Da das Vorhandensein eines Gesichts in den Bilddaten ein sehr aussagekräftiges Anzeichen für das mögliche Auftreten von rote-Augen-Defekten ist, ist es auch möglich, die Bilddaten einem Gesichtserkennungsverfahren zu unterziehen, um festzustellen, ob sich Gesichter in den Bilddaten befinden. Dazu sind Gesichtsfinder, wie sie zur Personenerkennung verwendet werden, geeignet. Diese arbeiten in Echtzeit, sind also schnell genug für Kopiergeräte, und erkennen Gesichter mittlerweile sehr zuverlässig. Derartige Verfahren basieren darauf, Dichteverläufe in den Bilddaten zu finden, welche den Dichteverläufen von Modellgesichtern entsprechen. Zum Vergleichen der Dichteverläufe werden z. B.

Templates, verformbare Gitter oder Eigenvektoren verwendet. Falls ein derartiges Gesichtserkennungsverfahren eingesetzt wird, kann u. U. auf die Suche nach zusammenliegenden Hauttönen verzichtet werden. Da diese Gesichtsfinder aber sehr rechenzeitintensiv sind, ist es oft vorteilhafter, die Gesichtserkennungsverfahren nur anzuwenden, wenn in Bildern Hauttöne erkannt wurden.

Eine weitere, zu überprüfende Voraussetzung für das Auftreten von rote-Augen-Defekten ist das Vorliegen von roten, runden Flecken. Falls in einem Bild keine roten, runden Flecken gefunden werden oder möglicherweise überhaupt keine rote Fläche zu finden ist, kann davon ausgegangen werden, dass keine roten-Augen-Defekte auftreten. Damit kann diese Voraussetzung für rote-Augen-Defekte gut als Ausschlusskriterium, aber auch als sehr starkes Kriterium für das Vorliegen von möglichen rote-Augen-Defekten als Eingangswert in ein neuronales Netz oder Ausgangswert zu einer Gesamtbewertung verwendet werden. Da die roten Flecken von rote-Augen-Defekten jedoch im allgemeinen im Ausmaß eher klein sind, muss diese Voraussetzung anhand der Daten der Hauptabtastung oder entsprechenden, hoch aufgelösten Daten überprüft werden, da die Daten der Vorabtastung für dieses Kriterium zu nieder aufgelöst sind. Somit wäre es als Ausschlusskriterium nur dann verwendbar, wenn auch nach dem Hauptscan nochmals eine Überprüfung durchgeführt wird, ob das rote-Augen-Erkennungsverfahren angewendet werden soll oder nicht. Da das Überprüfen der hoch aufgelösten Daten aber viel Zeit in Ansprucht nimmt, ist es vorteilhafter, das Suchen nach roten Flecken erst im Rahmen des rote-Augen-Erkennungsverfahrens durchzuführen.

Auf derselben Voraussetzung aufbauend, ergibt sich ein weiteres, vorteilhaftes Anzeichen, welches darauf hindeutet, dass rote-Augen-Defekte vorliegen. Dieses Anzeichen basiert darauf, dass bei der Reflexion des Blitzes am Augenhintergrund auch ein gewisser Anteil des Blitzlichts direkt zurückreflektiert wird und somit im Bild als weißer Punkt innerhalb der runden, roten Fläche des rote-Augen-Defekts auftritt. Als Anzeichen wird also eine Rot-Weiß-Kombination gesucht. Wird eine derartige Rot-Weiß-Kombination gefunden, so wird überprüft, ob die rote Fläche rund ist und der weiße Punkt innerhalb der roten Fläche liegt. Es ist aber auch vorteilhaft, gefundene Rot-Weiß-Kombinationen daraufhin zu analysieren, ob es sich möglicherweise um kleine rote, runde Flächen mit einer dunklen Umrandung der Iris in einer größeren weißen Fläche des Augapfels handelt. Auch diese Art von Rot-Weiß-Kombination kann als Anzeichen für das Auftreten von rote-Augen-Defekten verwendet werden. Es ist vorteilhaft, rote und weiße Flächen unabhängig voneinander parallel zu suchen und anschließend zu überprüfen, ob diese Flächen miteinander kombiniert sind. Falls dies zutrifft, werden dann Farbe und/oder Form oder Dichteverlauf der Kombinationen untersucht, so dass festgestellt werden kann, ob es sich dabei um eine Kombination rote-Augen-Defekt mit Lichtreflex oder Augapfel handelt.

Ein weiteres, vorteilhaftes Anzeichen für das Auftreten von rote-Augen-Defekten ist das Vorliegen von Detail-Strukturen in den Bilddaten. In sehr homogenen Bildern, in denen beispielsweise Himmel und Meer oder Himmel und Strand etc. aufgenommen werden, werden keine Detail-Strukturen zu finden sein, da weder Personen noch Gegenstände abgebildet sind. Hier werden auch keine roten-Augen-Defekte auftreten. Rote-Augen-Defekte treten immer dann auf, wenn Personen möglicherweise mit einem Hintergrund oder in Gruppen fotografiert werden. Dabei zeigen sowohl Personen- als auch Porträt- oder Gruppenaufnahmen viele Detail-Strukturen. Ob in einem Bild viele Strukturen auftreten oder es sich um ein sehr homogenes Bild handelt, kann anhand der Fouriertransformierten überprüft werden. Wenn die Fouriertransformierte der Bilddaten bereits bei tiefen Frequenzen sehr stark abfällt, kann davon ausgegangen werden, dass wenig Strukturen im Bild zu erkennen sind und somit eher keine roten-Augen-Defekte auftreten, wogegen bei einem flacheren Verlauf der Fouriertransformierten davon ausgegangen werden kann, dass Strukturen im Bild vorhanden sind und damit die Möglichkeit des Vorliegens von rote-Augen-Defekt gegeben ist.

Es ist vorteilhaft, nach einer Entscheidung über das Vorliegen von möglichen rote-Augen-Defekten noch ein Überprüfungsverfahren anzuschließen, anhand dessen kontrolliert wird, ob die ermittelten Kandidaten tatsächlich rote-Augen-Defekte sind. Die Überprüfung der Kandidaten läßt sich beispielsweise so durchführen, dass zu einem möglichen rote-Augen-Defekt ein zweiter möglicher rote-Augen-Defekt gesucht wird, welcher in Abstand und Orientierung derart zu dem ersten erkannten, möglichen Defekt passt, dass beide zusammen als zu einem Augenpaar gehörig identifiziert werden.

Sehr vorteilhaft ist es, zur Überprüfung möglicher Defekte ein Gesichtserkennungsverfahren ― wie es bereits zur Detektion möglicher rote-Augen-Defekte beschrieben wurde ― einzusetzen. Dieses Verfahren nicht als Anzeichen, sondern zur Überprüfung zu verwenden, ist vorzuziehen, da es sehr rechenzeitintensiv ist. Dies wirkt sich bei der Überprüfung nicht so negativ ist, da nur wenige ausgewählte Bilder zu überprüfen sind. Wird es dagegen als Anzeichen für mögliche Defekte verwendet, müßten viele Bilder mit diesem zeitintensiven Verfahren bearbeitet werden. Bei der Überprüfung wird - ausgehend von einem möglichen rote-Augen-Defekt mittels eines Gesichtserkennungsverfahrens ― versucht, im Bildinhalt ein Gesicht zu finden, welches an der Position des möglichen rote-Augen-Defekts ein Auge aufweist.

Hierzu eignen sich auch insbesondere die bereits erwähnten Personenerkennungsverfahern, welche Gesichter in Bildern suchen, die mit einer Videokamera in zu überwachenden Räumen aufgenommen wurden. Hierzu werden die Bilddaten in Graustufenbilder niedriger Auflösung umgewandelt. In diesen reduzierten Bilddaten werden dann Dichteverläufe gesucht, die den Dichteverläufen von Vergleichsgesichtern entsprechen und bei dem am besten übereinstimmenden Vergleichsgesichts-Dichteverlauf wird ein Ähnlichkeitswert gebildet. Ist der Ähnlichkeitswert sehr hoch, also die Übereinstimmung der Dichteverläufe sehr gut, so kann davon ausgegangen werden, dass sich an der entsprechenden Stelle in Gesicht im Bild befindet. Diese Gesichtserkennungsverfahren basieren darauf, dass Gesichtsmerkmale wie Augen, Augenbrauen, Nase, Mund, Kinn, etc. durch in Zusammenhang mit dem übrigen Gesicht typische Dichteverläufe wiedergegeben werden und sind damit weitaus spezifischer als bisherige, in rote-Augen-Erkennungsverfahren verwendete Kriterien wie Hauttonerkennung und Einpassen einer Ellipse in die ermittelte Hautfläche. Letztere Kriterien können nämlich kaum zwischen Gesichtern und Händen oder schlimmstenfalls Kürbissen unterscheiden.

Sobald ein passendes Gesicht zu den möglichen rote-Augen-Defekten gefunden wurde, gelten diese Defekte als bestätigt und werden korrigiert. Bei der bisherigen Beschreibung wurde davon ausgegangen, zu jedem möglichen rote-Augen-Defekt einzeln ein Gesicht zu suchen. Dabei müssen alle möglichen Orientierungen überprüft werden, was das Verfahren sehr aufwändig macht.

Das Gesichtserkennungsverfahren zur Überprüfung möglicher rote-Augen-Defekte ist weniger aufwändig, wenn vor Anwendung des Gesichtserkennungsverfahrens Paare möglicher Defekte gebildet werden. Falls zwei zueinander passende mögliche Defekte zugeordnet werden können, ist die Orientierung eines möglichen Gesichts nämlich bereits vorgegeben. Ausgehend von den eventuellen Augen kann es nur noch nach oben oder unten gerichtet sein. Durch die Paarbildung kann also wiederum Rechenzeit beim Suchen eines Gesichts gespart werden. Nachteilig ist jedoch, dass Profilaufnahmen mit einem einzelnen roten Auge nicht gefunden werden.

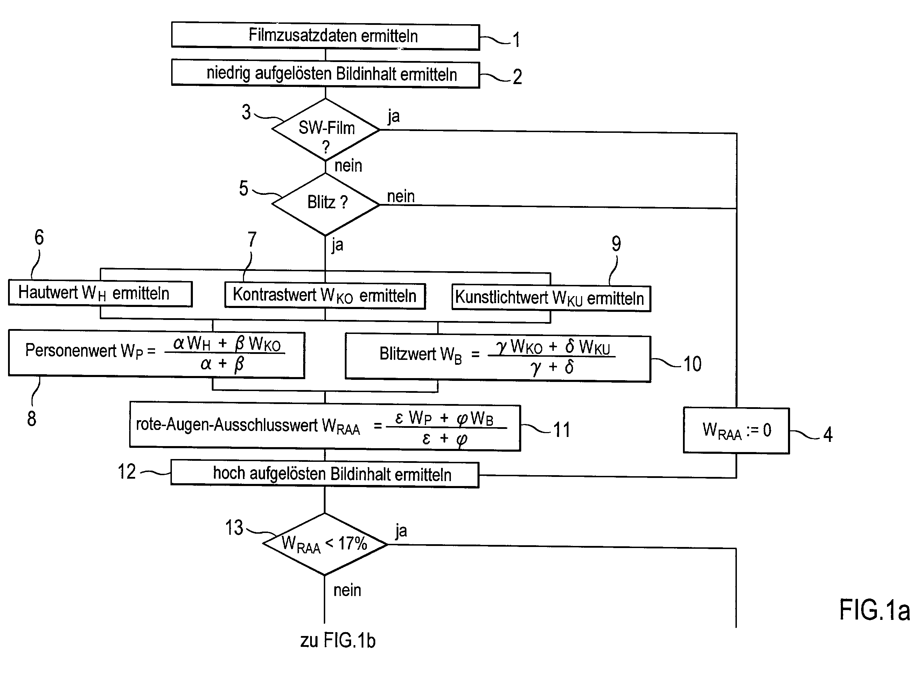

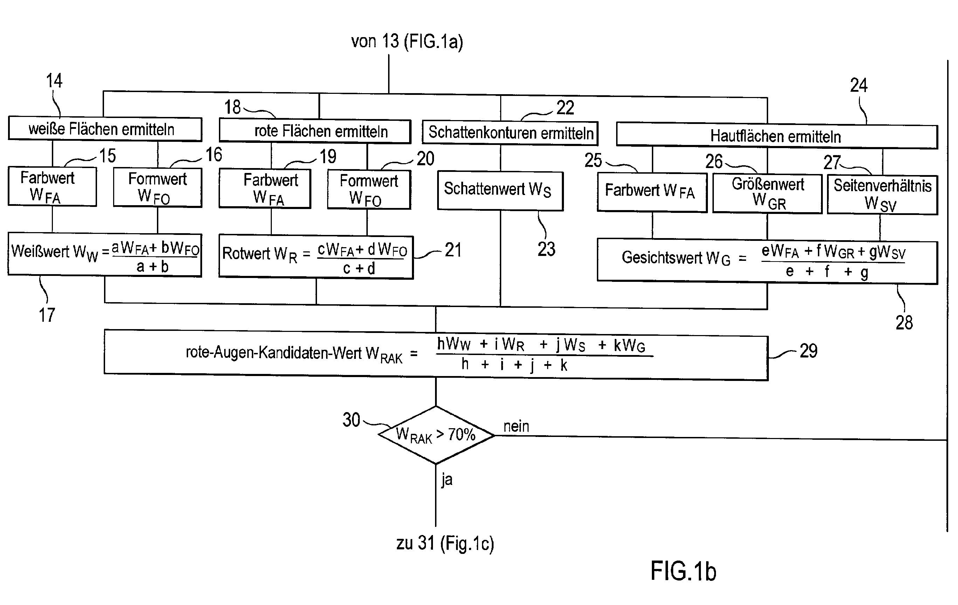

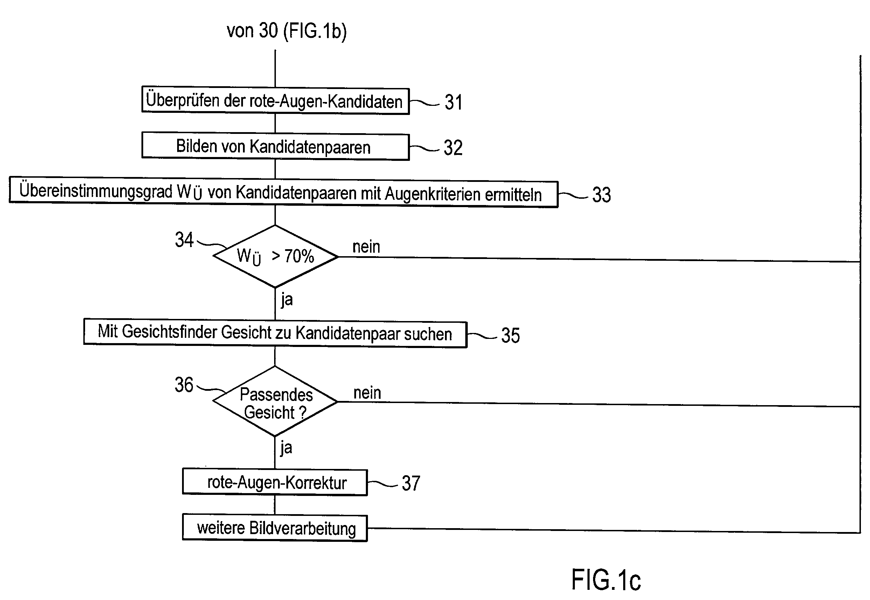

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Die einzige Figur zeigt ein Ablaufschema eines Ausführungsbeispiels des erfindungsgemäßen Verfahrens.

In der Figur wird anhand eines Flussdiagramms eine vorteilhafte Ausführungsform der Erfindung erläutert.

Um fotografische Bilddaten auf rote-Augen-Defekte hin untersuchen zu können, müssen die Bilddaten, wenn sie nicht ohnehin - z. B. von einer Digitalkamera ― digital vorliegen, zuerst an einer Abtasteinrichtung, einem sog. Scanner, ermittelt werden. Hierbei ist es in der Regel vorteilhaft, in einer niedrig aufgelösten Vorabtastung zuerst Filmzusatzdaten, wie beispielsweise den Magnetstreifen eines APS-Films, auszulesen und in einem groben Raster den Bildinhalt zu ermitteln. Für derartige Vorabtastungen werden in der Regel CCD-Zeilen verwendet, wobei die Filmzusatzdaten entweder mit derselben CCD-Zeile wie der Bildinhalt ausgelesen oder an einem eigenen Sensor erfasst werden. Die Filmzusatzdaten werden in einem Schritt 1 ermittelt, sie können aber auch parallel mit den nieder aufgelösten Bildinhaltsdaten erfasst werden, welche ansonsten in einem Schritt 2 ermittelt werden. Die nieder aufgelösten Bilddaten können auch dadurch gewonnen werden, dass der Film hoch aufgelöst abgetastet wird und dieser hoch aufgelöste Datensatz zu einem niedriger aufgelösten Datensatz zusammengefasst wird. Das Zusammenfassen kann beispielsweise dadurch geschehen, dass über eine bestimmte Datenanzahl der Mittelwert gebildet wird oder dadurch, dass nur jeder x-te hoch aufgelöste Bildpunkt für den nieder aufgelösten Bilddatensatz berücksichtigt wird. Anhand der Filmzusatzdaten wird dann in einem Schritt 3 bzw. im ersten Datenauswertschritt entschieden, ob es sich um einen Schwarzweißfilm handelt. Falls es sich um einen Schwarzweißfilm handelt, wird das rote-Augen-Erkennungsverfahren abgebrochen, der rote-Augen-Ausschlusswert W_{RAA} wird in einem Schritt 4 auf Null gesetzt, die hoch aufgelösten Bilddaten werden ermittelt, falls sie nicht aus einem digitalen Datensatz ohnehin vorliegen, und die Bearbeitung der hoch aufgelösten Bilddaten mittels weiterer vorgesehener Bildverarbeitungsverfahren wird fortgesetzt. Ebenso wird verfahren, wenn in einem Prüfschritt 5 festgestellt wird, dass in den Filmzusatzdaten ein Blitzmarker enthalten ist und dieser anzeigt, dass bei der Aufnahme des Bildes nicht geblitzt wurde. Sobald anhand eines derartigen Blitzmarkers festgestellt wurde, dass bei der Aufnahme kein Blitz verwendet wurde, können im Bilddatensatz keine roten-Augen-Defekte vorliegen. Deshalb wird auch hier der rote-Augen-Ausschlusswert W_{RAA} auf Null gesetzt, die hoch aufgelösten Bilddaten ermittelt und andere, weitere Bildverarbeitungsverfahren werden begonnen. Anhand der Ausschlusskriterien "Schwarzweißfilm" und "kein Blitz bei der Aufnahme", welche sich aus den Filmzusatzdaten ermitteln lassen, werden also von vornherein Bilder, welche mit Sicherheit keine roten Augen aufweisen können, von dem rote-Augen-Erkennungsverfahren ausgeschlossen. Durch das Verwenden derartiger Ausschlusskriterien kann viel Rechenzeit gespart werden, da auf die ausgeschlossenen Bilder das weitere, aufwändige rote-Augen-Erkennungsverfahren nicht mehr angewandt werden muss.

In den folgenden Schritten werden weitere Ausschlusskriterien überprüft, welche aus dem niedrig aufgelösten Bildinhalt abgeleitet werden können. So wird bei den verbleibenden Bildern aus deren nieder aufgelösten Bilddaten in einem Schritt 6 der Hautwert ermittelt. Hierfür werden in den Bilddaten in einem sehr groben Raster Hauttöne gesucht, welche ein Hinweis darauf sind, dass sich auf der Fotografie überhaupt Personen befinden. Als weiterer Hinweis hierfür zählt auch der in einem Schritt 7 ermittelte Kontrastwert. In einem sehr kontrastarmen Bild kann ebenfalls davon ausgegangen werden, dass keine Personen aufgenommen wurden. Es ist vorteilhaft, Hautwert und Kontrastwert in einem Schritt 8 zu einem Personenwert zusammenzufassen. Dabei ist es sinnvoll, eine Wichtung der Ausschlusswerte "Hautwert" und "Kontrastwert" vorzunehmen. So kann beispielsweise der Hautwert bei der Frage, ob Personen auf dem Bild vorhanden sind, ein größeres Gewicht haben als der Kontrastwert. Die richtige Wichtung läßt sich anhand der Überprüfung mehrerer Bilder herausfinden, bzw. sie kann auch durch eine Bearbeitung der Werte in einem neuronalen Netz erfolgen. Der Kontrastwert wird mit einem in Schritt 9 ermittelten Kunstlichtwert zusammengefasst, welcher darüber Aufschluss gibt, ob eine künstliche Beleuchtung - wie beispielsweise eine Glühbirne oder Neonröhre - im Bild dominiert hat, um eine Aussage darüber zu gewinnen, ob die Aufnahme der Bilddaten von einem Kamerablitz dominiert wurde. Dabei wird aus Kontrastwert und Kunstlichtwert der Blitzwert in Schritt 10 gebildet.

Sind Personen- und Blitzwert sehr gering, so kann davon ausgegangen werden, dass sich weder eine Person auf dem Bild befindet noch eine Blitzaufnahme gemacht wurde. Damit kann das Auftreten von rote-Augen-Defekten im Bild ausgeschlossen werden. Hierfür wird aus Personenwert und Blitzwert in einem Schritt 11 der rote-Augen-Ausschlusswert W_{RAA} gebildet. Es ist nicht zwingend notwendig, dass die Ausschlusskriterien "Personenwert" und "Blitzwert" zu einem einzigen Ausschlusswert zusammengefasst werden. Sie können ebenso als getrennte Ausschlusswerte betrachtet werden. Weiterhin ist vorstellbar, beliebige andere Ausschlusskriterien zu überprüfen, welche einen Hinweis darauf geben, dass keine rote-Augen-Defekte in den Bilddaten vorliegen können.

Wichtig bei der Wahl der Ausschlusskriterien ist es, darauf zu achten, dass die Überprüfung dieser Kriterien aufgrund der nieder aufgelösten Bilddaten möglich sein muss, da nur sinnvoll Rechenzeit gespart werden kann, wenn sehr wenige Bilddaten sehr schnell daraufhin untersucht werden können, ob ein rote-Augen-Erkennungsverfahren überhaupt angewandt werden soll oder solche Defekte von vornherein ausgeschlossen werden können. Würde die Überprüfung von Ausschlusskriterien an den hoch aufgelösten Bilddaten erfolgen, wäre die Einsparung der Rechenzeit nicht so groß, dass es sich lohnen würde, bereits vor dem Defekterkennungsverfahren zusätzlich Kriterien zu überprüfen. In diesem Fall wäre es sinnvoller, gleich bei allen Aufnahmen ein rote-Augen-Erkennungsverfahren durchzuführen. Werden hingegen die nieder aufgelösten Bildinhaltsdaten verwendet, um Ausschlusskriterien zu überprüfen, kann diese Überprüfung sehr schnell erfolgen, so dass viel Rechenzeit gespart wird, da nicht bei jedem Bild das aufwändige rote-Augen-Erkennungsverfahren anhand der hoch aufgelösten Daten vorgenommen werden muss.

Falls sie noch nicht digital vorliegen, müssen in einem Schritt 12 nunmehr von allen Bildern die Daten des hoch aufgelösten Bildinhalts ermittelt werden. Dies erfolgt bei fotografischen Filmen in der Regel durch Scannen mit einem hoch auflösenden Flächen-CCD. Es ist aber auch möglich, CCD-Zeilen zu verwenden oder entsprechende, in diesem Bereich gängige andere Sensoren.

Falls die Voranalyse ergeben hatte, dass der rote-Augen-Ausschlusswert sehr gering ist, Wird davon ausgegangen, dass keine rote-Augen-Defekte auf dem Bild vorliegen können. Die weiteren Bildverarbeitungsverfahren wie beispielsweise Verschärfung oder Kontrastbearbeitung werden eingeleitet, ohne ein rote-Augen-Erkennungsverfahren an dem entsprechenden Bild vorzunehmen. Ergibt dagegen der Überprüfungsschritt 13, dass rote-Augen-Defekte nicht von vornherein ausgeschlossen werden können, so werden die hoch aufgelösten Bilddaten daraufhin überprüft, ob bestimmte Voraussetzungen oder Anzeichen für das Vorliegen von rote-Augen-Defekten vorhanden sind, es beginnt das eigentliche Defekt-Erkennungsverfahren.

Diese Voraussetzungen und/oder Anzeichen werden vorteilhafterweise unabhängig voneinander geprüft. Um Rechenzeit zu sparen, ist es besonders vorteilhaft, sie parallel zu prüfen. So werden in einem Schritt 14 die hoch aufgelösten Bilddaten daraufhin untersucht, ob in ihnen weiße Flächen zu finden sind. Zu derartigen weißen Flächen wird ein Farbwert W_{FA} in einem Schritt 15 ermittelt, der ein Maß dafür ist, wie reinweiß diese weißen Flächen sind. Außerdem wird in einem Schritt 16 ein Formwert W_{FO} ermittelt, welcher angibt, ob diese ermittelten weißen Flächen in etwa der Form eines abgebildeten Augapfels oder einem Lichtreflex in einem Auge entsprechen können oder nicht. Farbwert und Formwert werden in einem Schritt 17 zu einem Weißwert zusammengefasst, wobei auch eine Wichtung dieser Werte vorgenommen werden kann. Parallel dazu werden in einem Schritt 18 rote Flächen ermittelt, denen ebenfalls in den Schritten 19 und 20 Farb- und Formwert zugewiesen werden. Hieraus wird für die roten Flächen in einem Schritt 21 der Rotwert ermittelt. Der Formwert bei roten Flächen bezieht sich darauf, ob die Form der ermittelten roten Flächen in etwa der Form eines rote-Augen-Defekts entspricht.

In einem weiteren, parallel zu untersuchenden Schritt 22 werden Schattenkonturen in den Bilddaten ermittelt. Dies kann beispielsweise dadurch geschehen, dass nach parallel gleich verlaufenden Konturlinien gesucht wird, wobei eine dieser Linien hell, die andere aber dunkel ist. Derartige Doppelkonturlinien sind ein Anzeichen dafür, dass der Schattenwurf einer Lichtquelle vorliegt. Wenn die Hell-/Dunkeldifferenz besonders groß ist, kann davon ausgegangen werden, dass die den Schatten erzeugende Lichtquelle das Blitzlicht einer Kamera war. Damit gibt der diesen Sachverhalt widerspiegelnde Schattenwert, welcher in einem Schritt 23 ermittelt wird, Auskunft darüber, ob die Wahrscheinlichkeit für einen Blitz hoch ist oder nicht.

In einem weiteren Schritt 24 werden die Bilddaten auf das Auftreten von Hautflächen hin untersucht. Sobald Hautflächen gefunden werden, wird von diesen ein Farbwert - also ein Wert, der darüber Auskunft gibt, wie nahe die Farbe der Hautflächen an einer Hauttonfarbe liegt ― in einem Schritt 25 ermittelt. In einem Schritt 26 wird parallel dazu ein Größenwert bestimmt, welcher ein Maß für die Größe der Hautflächen ist. Ebenso parallel dazu wird in einem Schritt 27 das Seitenverhältnis, also das Verhältnis von langer zu kurzer Seite der Hautfläche, ermittelt. Farbwert, Größenwert und Seitenverhältnis werden in einem Schritt 28 zu einem Gesichtswert zusammengefasst, welcher ein Maß dafür ist, inwieweit die ermittelte Hautfläche in Farbe, Größe und Form einem Gesicht ähnelt.

In einem Schritt 29 werden Weißwert, Rotwert, Schattenwert und Gesichtswert zu einem rote-Augen-Kandidatenwert W_{RAK} zusammengefasst. Dabei kann davon ausgegangen werden, dass beim Vorliegen von weißen Flächen, roten Flächen, Schattenkonturen und Hautflächen in digitalen Bilddaten die Wahrscheinlichkeit für das Vorliegen von roten Augen sehr groß ist und die ermittelten roten Flächen als rote-Augen-Kandidaten gewertet werden können, falls sie sich aufgrund ihrer Form dazu eignen. Bei der Bildung dieses rote-Augen-Kandidatenwerts können noch weitere Bedingungen über den Zusammenhang von Weißwert, Rotwert und Gesichtswert eingebracht werden. So kann beispielsweise ein Faktor eingeführt werden, der Aufschluss darüber gibt, ob rote und weiße Flächen nebeneinander liegen oder nicht. Ebenso kann berücksichtigt werden, ob rote und weiße Flächen innerhalb der ermittelten Hautfläche liegen oder weit entfernt von ihr. Diese Zusammenhangsfaktoren können in den rote-Augen-Kandidatenwert mit eingerechnet werden. Eine Alternative zur Ermittlung des rote-Augen-Kandidatenwerts ist es, Farbwerte, Formwerte, Schattenwert, Größenwert, Seitenverhältnis etc. gemeinsam mit Zusammenhangsfaktoren in ein neuronales Netz einzuspeisen und von diesem den rote-Augen-Kandidatenwert ausgeben zu lassen.

In einem Schritt 30 wird schließlich der ermittelte rote-Augen-Kandidatenwert mit einem Schwellwert verglichen. Falls der Wert die Schwelle überschreitet, wird davon ausgegangen, dass rote-Augen-Kandidaten im Bild vorliegen. In einem Schritt 31 wird überprüft, ob diese roten-Augen-Kandidaten tatsächlich rote-Augen-Defekte sein können. Hierbei können beispielsweise rote-Augen-Kandidaten und ihre Umgebung mit dem Dichteprofil von wirklichen Augen verglichen werden, um aufgrund von Ähnlichkeiten darauf zu schließen, dass die rote-Augen-Kandidaten sich tatsächlich innerhalb eines aufgenommenen Auges befinden.

Eine weitere Möglichkeit der Überprüfung der rote-Augen-Kandidaten ist es, jeweils zwei zusammenpassende Kandidaten mit annähernd gleichen Eigenschaften zu suchen, welche zu einem Augenpaar gehören. Dies kann in einem folgenden Schritt 32 oder auch alternativ zu Schritt 31 oder aber parallel dazu erfolgen. Falls dieser Überprüfungsschritt gewählt wird, werden nur rote-Augen-Defekte in frontal aufgenommenen Gesichtern erkannt. Profilaufnahmen mit nur einem roten Auge können davon nicht erfasst werden. Da rote-Augen-Defekte aber im allgemeinen bei Frontalaufnahmen auftreten, kann dieser Fehler in Kauf genommen werden, um Rechenzeit zu sparen. Falls zum Überprüfen die in den Schritten 31 und 32 vorgeschlagenen Kriterien betrachtet werden, wird anhand dieser Kriterien ein Schritt 33 der Übereinstimmungsgrad der gefundenen Kandidatenpaare mit Augenkriterien ermittelt. Im Schritt 34 wird der Übereinstimmungsgrad mit einem Schwellwert verglichen, um danach zu entscheiden, ob die rote-Augen-Kandidaten mit großer Wahrscheinlichkeit rote-Augen-Defekte sind oder nicht. Falls keine große Übereinstimmung festgestellt werden kann, muss davon ausgegangen werden, dass es sich um irgendwelche anderen roten Bildinhalte handelt, welche keinesfalls zu korrigieren sind. In diesem Fall wird die Bearbeitung des Bildes mit anderen Bildverarbeitungsalgorithmen fortgesetzt, ohne eine rote-Augen-Korrektur vorzunehmen.

Falls der Übereinstimmungsgrad der Kandidaten mit Augenkriterien jedoch relativ groß ist, wird in einem weiteren Schritt 35 ein Gesichtserkennungsverfahren auf die digitalen Bilddaten angewandt, welches ein zu dem Kandidatenpaar passendes Gesicht suchen soll. Eine Paarbildung aus den Kandidaten hat dabei den Vorteil, dass die Orientierung eines möglichen Gesichts schon vorgegeben ist. Nachteilig ist ― wie bereits erwähnt ― dass rote-Augen-Defekte in Profilaufnahmen nicht erkannt werden. Falls dieser Fehler nicht in Kauf genommen werden soll, ist es jedoch auch möglich, zu jedem rote-Augen-Kandidaten ein Gesichtserkennungsverfahren zu starten und ein zu diesem Kandidaten möglicherweise passendes Gesicht zu suchen. Dies erfordert mehr Rechenzeit, führt aber zu einem sichereren Ergebnis. Falls in einem Schritt 36 kein zu rote-Augen-Kandidaten passendes Gesicht gefunden wird, muss davon ausgegangen werden, dass es sich bei den rote-Augen-Kandidaten nicht um Defekte handelt, das rote-Augen-Korrekturverfahren wird nicht angewandt, sondern weitere Bildverarbeitungsalgorithmen werden gestartet. Falls jedoch ein zu den rote-Augen-Kandidaten passendes Gesicht ermittelt werden kann, kann davon ausgegangen werden, dass es sich bei den rote-Augen-Kandidaten tatsächlich um Defekte handelt, und diese werden in einem Korrekturschritt 37 mit einem gängigen Korrekturverfahren korrigiert. Als zur Überprüfung von rote-Augen-Kandidaten geeignetes Gesichtserkennungsverfahren können beispielsweise die bereits beschriebenen, mit Dichteverläufen arbeitenden Verfahren verwendet werden. Prinzipiell ist es aber auch möglich, einfachere Verfahren wie Hauttonerkennung und Ellipsenfit zu verwenden. Diese sind jedoch fehleranfälliger.

## Patentansprüche

1. Verfahren zum automatischen Erkennen von rote-Augen-Defekten in fotografischen Bilddaten, wobei
- Bild- und/oder Aufnahmedaten auf mehrere vorgegebene Anzeichen und/oder Voraussetzungen hin unabhängig voneinander analysiert,
- ein Wert für das Vorhandensein der einzelnen Anzeichen und/oder Voraussetzungen ermittelt wird,
- die ermittelten Werte zu einer Gesamtbewertung zusammengefasst werden,
- anhand der Gesamtbewertung eine Entscheidung über das Vorhandensein von möglichen rote-Augen-Defekten getroffen wird,
- die möglichen rote-Augen-Defekte lokalisiert und
- anhand von Überprüfungskriterien entschieden wird, ob es sich dabei tatsächlich um rote-Augen-Defekte handelt.

2. Verfahren nach Anspruch 1, wobei als Werte Wahrscheinlichkeiten ermittelt werden.

3. Verfahren nach Anspruch 1 oder 2, wobei die Gesamtbewertung durch Errechnen einer Gesamtwahrscheinlichkeit und die Entscheidung durch deren Vergleichen mit einem Schwellwert erfolgt.

4. Verfahren nach einem der vorhergehenden Ansprüche, wobei die ermittelten Werte gewichtet werden.

5. Verfahren nach Anspruch 1 oder 2, wobei die Gesamtbewertung mittels eines neuronalen Netzes erfolgt.

6. Verfahren nach Anspruch 5, wobei die Entscheidung mittels eines neuronalen Netzes erfolgt.

7. Verfahren nach einem der vorhergehenden Ansprüche, wobei Anzeichen und/oder Voraussetzungen parallel analysiert werden.

8. Verfahren nach einem der vorhergehenden Ansprüche, wobei Ausschlusskriterien überprüft werden, bei deren Vorliegen rote-Augen-Defekte ausgeschlossen werden.

9. Verfahren nach Anspruch 8, wobei bei Vorliegen eines Auschlusskriteriums das Verfahren zum Erkennen roter-Augen-Defekte automatisch übersprungen wird.

10. Verfahren nach einem der vorhergehenden Ansprüche, wobei eine Voraussetzung das Vorliegen einer Blitzaufnahme ist.

11. Verfahren nach Anspruch 10, wobei die Blitzaufnahme anhand von Aufnahmedaten erkannt wird, die beim Aufnehmen des Bildes auf dem Film oder zusammen mit den digitalen Bilddaten gespeichert werden.

12. Verfahren nach Anspruch 10, wobei das Vorliegen einer Blitzaufnahme anhand einer Bildanalyse festgestellt wird.

13. Verfahren nach einem der vorhergehenden Ansprüche, wobei ein Anzeichen zusammenliegende Hauttöne sind.

14. Verfahren nach einem der vorhergehenden Ansprüche, wobei ein Anzeichen die Erkennung eines Gesichtes ist.

15. Verfahren nach einem der vorhergehenden Ansprüche, wobei eine Voraussetzung das Auffinden eines roten runden Fleckens ist.

16. Verfahren nach einem der vorhergehenden Ansprüche, wobei ein Anzeichen das Auffinden kleiner roter, runder Flächen mit einem weißen Punkt eines Lichtreflexes innerhalb der Flächen ist.

17. Verfähren nach einem der vorhergehenden Ansprüche, wobei ein Anzeichen die Häufigkeit von Strukturen im Bild ist, welche insbesondere anhand des Abfalls der Fouriertransformierten bestimmt werden kann.

18. Verfahren nach einem der vorhergehenden Ansprüche, wobei bei einer positiven Entscheidung über das Vorliegen von rote-Augen-Defekten ein Überprüfungsverfahren durchgeführt wird.
